# EUROPEAN PATENT APPLICATION

(11) **EP 3 042 734 A1**
(43) Date of publication of application: **13.07.2016**
(21) Application number: 14833568.0
(22) Date of filing: 03.07.2014
(51) Int. Cl.: B23K 26/20, B23K 26/10

(54) **METHOD FOR WELDING UPPER RAIL OF SEAT TRACK FOR VEHICLE SEAT AND ADAPTOR BRACKET**

(30) Priority: 03.09.2013 KR 20130105356
(71) Applicant: Austem Co. Ltd., Ceonan-si, Chungcheongnam-do 330-882 (KR)
(72) Inventor: PAING, Hyun Sung, Incheon 404-250 (KR); CHA, Seung Am, Cheonan-si Chungcheongnam-do 330-765 (KR)
(74) Representative: Straube, Urs Norman
(86) International application number: PCT/KR2014/005943
(87) International publication number: WO 2015/034171

(57) **Abstract**

The present invention relates to a method of welding an upper rail of a seat track for vehicle seat and adapter bracket for supporting a seat frame, the method comprising: contacting surface-to-surface a lower surface of a planar coupling surface part which constitutes a lower end part of the adapter bracket and extends in a longitudinal direction to a predetermined length onto an upper surface of a planar horizontal surface part which constitutes an upper end part of the upper rail and extends in the longitudinal direction; and joining the coupling surface part and the horizontal surface part by welding a lower surface of the horizontal surface part where the horizontal surface part is overlapped with the coupling surface part. Therefore, welding strength between the upper rail of the seat track and the adapter bracket can be reinforced and working hours required to the welding job can be remarkably decreased compared to a conventional art where the welding was performed along an edge of the coupling surface part.

## Description

### I. Technical Field

The present invention relates to a method of welding an adapter bracket, which intermediates in a connection between a seat track and a seat frame that constitute a vehicle seat, to an upper rail of the seat track.

### II. Background Art

A seat track for vehicle seat comprises a lower rail (not shown) fixed to a floor of a chassis part and an upper rail 10, 10' coupled to the lower rail to be slidable in a longitudinal direction.

The upper rail 10, 10' extends in the longitudinal direction with the same cross section and it has at its upper end a planar horizontal surface part 11, 11' which also extends in the longitudinal direction. A plurality of adapter brackets 21 to 24 are coupled to an upper surface of the horizontal surface part 11, 11'.

The adapter brackets 21 to 24 function as connecting means for installing a seat frame (not shown) over the seat track.

Conventionally, the coupling between the upper rail 10, 10' and the adapter brackets 21 to 24 has been made by contacting lower surfaces of planar coupling surface parts 22a, 24a which form lower end parts of the adapter brackets 21 to 24 onto the horizontal surface part 11, 11' and performing welding along edges of the coupling surface parts 22a, 24a so that the adapter brackets 21 to 24 can be joined together with the upper rail 10, 10'.

However, according to the conventional method of welding between the upper rail 10, 10' and the adapter brackets 21 to 24, the length of the welding is limited upto the length of edges of the coupling surface parts 22a, 24a. Therefore, coupling strength accomplished by the welding between the members are also limited.

In this case, due to an insufficient welding strength, the seat frame may be separated from the seat rail when there is an impact in such as collision between vehicles, so that a large-scale traffic accident may be caused.

Also, in an aspect of the manufacturing process, the job of welding along the edges of the coupling surface parts 22a, 24a as described above requires excessive working hours due to their small sizes and complicated shapes.

### III. Technical Problem

Accordingly, it is an object of the present invention to provide method of welding upper rail and adapter bracket in a seat track for vehicle seat which can reinforce welding strength between the upper rail of the seat track and the adapter bracket and remarkably decrease working hours required to the welding job compared to the conventional art.

### IV. Technical Solution

In order to accomplish the above object, the present invention provides a method of welding an upper rail of a seat track for vehicle seat and adapter bracket for supporting a seat frame, the method comprising: contacting surface-to-surface a lower surface of a planar coupling surface part which constitutes a lower end part of the adapter bracket and extends in a longitudinal direction to a predetermined length onto an upper surface of a planar horizontal surface part which constitutes an upper end part of the upper rail and extends in the longitudinal direction; and joining the coupling surface part and the horizontal surface part by welding a lower surface of the horizontal surface part where the horizontal surface part is overlapped with the coupling surface part.

According to an aspect of the present invention, joining the coupling surface part and the horizontal surface part comprises performing laser welding along a two-dimensional path within an area of the lower surface of the horizontal surface part which is overlapped with the coupling surface part so that the joining between the coupling surface part and the horizontal surface part can be achieved.

According to an aspect of the present invention, the two-dimensional path is a shape of a zigzag.

In order to accomplish the above object, the present invention also provides a method of welding an upper rail of a seat track for vehicle seat and adapter bracket for supporting a seat frame, the method comprising: contacting surface-to-surface a lower surface of a planar coupling surface part which constitutes a lower end part of the adapter bracket and extends in a longitudinal direction to a predetermined length onto an upper surface of a planar horizontal surface part which constitutes an upper end part of the upper rail and extends in the longitudinal direction; adding a planar patch plate onto a lower surface of the horizontal surface part where the horizontal surface part is overlapped with the coupling surface part; and joining the patch plate, the coupling surface part and the horizontal surface part integrally by welding a lower surface of the patch plate.

According to an aspect of the present invention, joining the patch plate, the coupling surface part and the horizontal surface part comprises performing laser welding along a two-dimensional path within an area of the lower surface of the patch plate so that the joining among the patch plate, the coupling surface part and the horizontal surface part can be achieved.

According to an aspect of the present invention, the two-dimensional path is a shape of a zigzag.

### V. Advantageous Effects

According to the method of welding upper rail and adapter bracket in a seat track for vehicle seat of the present invention as described above, the adapter bracket contacting an upper surface of the horizontal surface part of the upper rail is joined together with the upper rail through the horizontal surface part by welding a lower surface of the horizontal surface part, so that object area of the welding can be established to correspond to overlappling area between the horizontal surface part and the adapter bracket.

Therefore, the welding strength between the upper rail of the seat track and the adapter bracket can be reinforced compared to the conventional art where only edge part of the overlappling area was welded.

Especially, as the two-dimensional welding such as zigzag welding can be performed in the overlappling area, the length of the welding as well as the welding strength can be much increased by overcoming the limited welding area of the conventional art where the welding was perfomed along the edge of the adapter bracket. In addition, the working hours required for the welding job can be decreased remarkably compared to the conventional edge welding.

Also, a planar patch plate is added on the lower surface of the horizontal surface part of the upper rail and welding is performed onto the patch plate so that the patch plate, the upper rail and the adapter bracket are all integrally joined together, so that the welding strength can be reinforced enough to prevent a problem of removal of the horizontal surface part of the upper rail, which is integrally joined to the adapter bracket, due to the raise of the adapter bracket caused by the inertia of the seat frame when there is a collision between front and rear vehicles.

Especially for a front adapter bracket which has smaller welding area, the welding strength can be reinforced by adding the patch plate as described above enough to prevent a problem of removal of the adapter bracket during a rear side collision test of a vehicle.

### VI. Description of Drawings

Fig. 1 is a perspective view of a principal part of a seat track where the method of welding upper rail and adapter bracket in a seat track for vehicle seat according to an exemplary embodiment of the present invention is applied;
Fig. 2 to Fig. 5 are partially expanded exploded views and front views for describing the method of welding upper rail and adapter bracket in a seat track for vehicle seat according to the exemplary embodiment of the present invention; and
Fig. 6 is a plan view of the seat track where the method of welding upper rail and adapter bracket in a seat track for vehicle seat according to the exemplary embodiment of the present invention is applied.

### VII. Best Mode

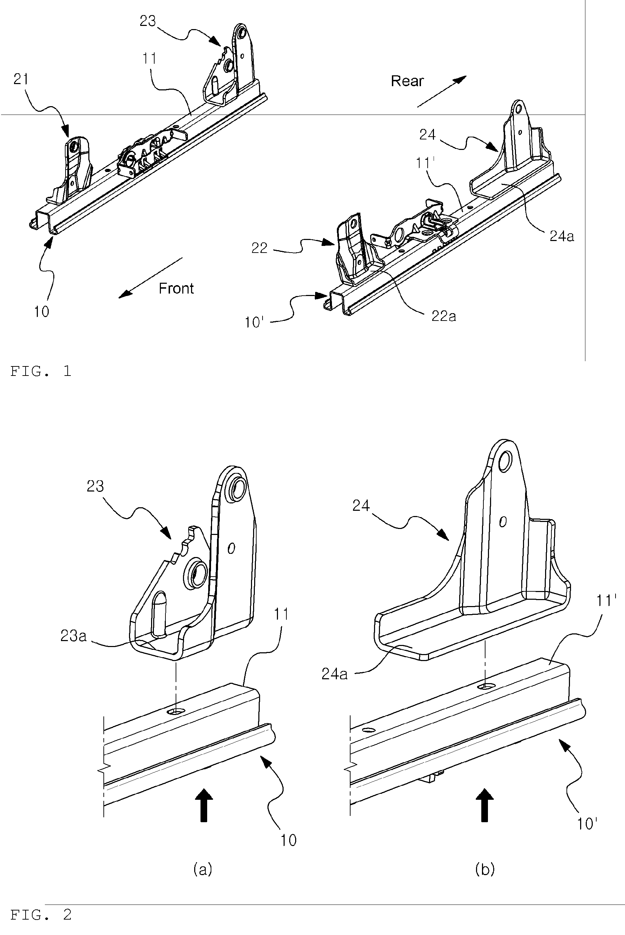

The method of welding upper rail and adapter bracket in a seat track for vehicle seat according to an exemplary embodiment of the present invention is applied to the seat track shown in Fig. 1 as in the conventional art.

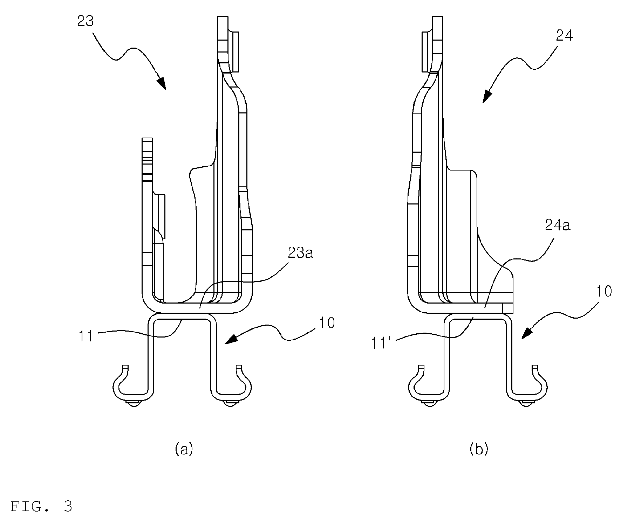

As shown in Fig. 2 and Fig. 3, rear left and right adapter brackets 23, 24 have comparably large surface contact area with the upper rail 10, 10'. A planar coupling surface part 23a, 24a which forms a lower end part of the adapter bracket 23, 24 contacts surface-to-surface in a longitudinal direction on an upper surface of a planar horizontal surface part 11, 11' which forms an upper end part of the corresponding upper rail 10, 10'.

Then, laser welding is performed directly onto the horizontal surface part 11, 11' upwardly from under the upper rail 10, 10' as indicated by an arrow in Fig. 2.

The laser welding is performed within an area overlapped between the horizontal surface part 11, 11' and the coupling surface part 23a, 24a and it may have various two-dimensional paths including straight line, curved line and etc.

Parts of the horizontal surface part 11, 11' which correspond to the welding path are directly heated by the welding to be a melting state so that they integrally join with the coupling surface part 23a, 24a which contacts surface-to-surface on the upper surface of the horizontal surface part 11, 11'.

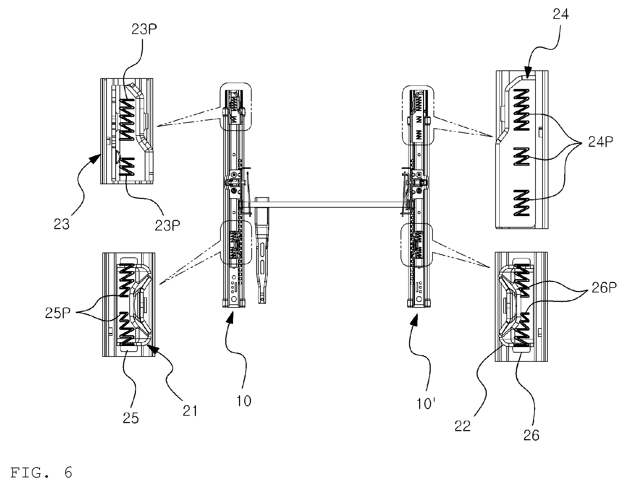

As shown in Fig. 6, the welding path of the laser welding in this embodiment has a shape of a zigzag 23P, 24P. Therefore, even if the area where the two members contact therebetween is limited, it is possible to have a space utilizing ability by which a sufficient welding strength can be achieved.

Referring to Fig. 1, the front left and right adapter brackets 21, 22 have comparably small surface contact area with the upper rail 10, 10'.

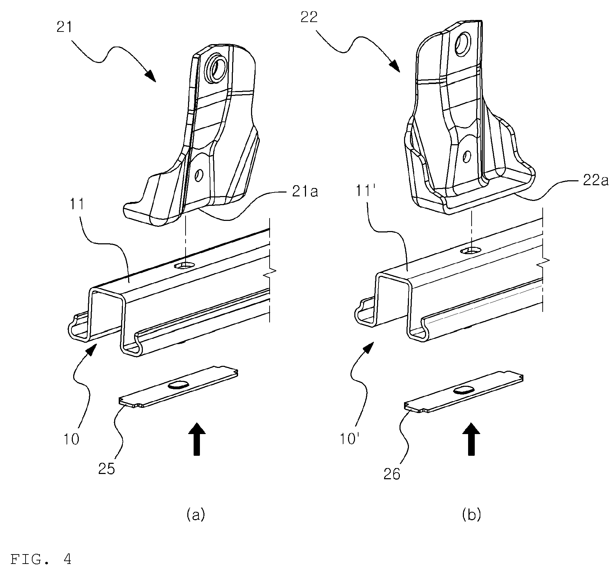

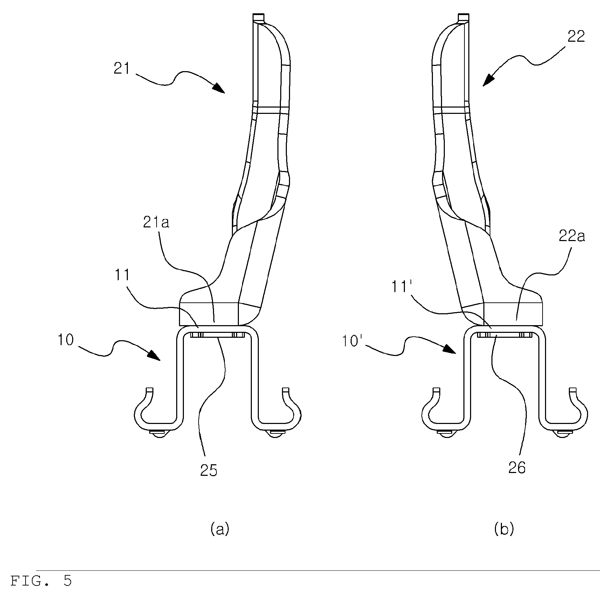

As shown in Fig. 4 and Fig. 5, a planar coupling surface part 21a, 22a which forms a lower end part of the adapter bracket 21, 22 contacts surface-to-surface in the longitudinal direction on the upper surface of the planar horizontal surface part 11, 11' which forms the upper end part of the corresponding upper rail 10, 10'.

Then, a planar patch plate 25, 26 is added onto the lower surface of the horizontal surface part 11, 11' to be overlapped with the coupling surface part 21a, 22a.

Afterwards, the laser welding is performed directly onto the patch plate 25, 26 upwardly from under the upper rail 10, 10' as indicated by the arrow in Fig. 4.

The laser welding onto the patch plate 25, 26 may be limited within the area overlapped between the horizontal surface part 11, 11' and the coupling surface part 21a, 22a. Or, when considering joining between the patch plate 25, 26 and the horizontal surface part 11, 11', the welding may also be performed on the area overlapped only between the patch plate 25, 26 and the horizontal surface part 11, 11' as well as the area overlapped between the horizontal surface part 11, 11' and the coupling surface part 21a, 22a.

The welding path may have a various two-dimensional path including straight line, curved line and etc.

Parts of the patch plate 25, 26 which correspond to the welding path are directly heated (in this case, parts of the horizontal surface part 11, 11' to correspond to the welding path are also heated) by the welding to be the melting state, so that they integrally join with the coupling surface part 23a, 24a which contacts surface-to-surface on the upper surface of the horizontal surface part 11, 11'.

As shown in Fig. 6, the welding path of the laser welding onto the front left and right patch plates 25, 26 also has a shape of a zigzag 25P, 26P. Therefore, even if the area where the two members contact therebetween is limited, it is possible to have a space utilizing ability by which a sufficient welding strength can be achieved.

Especially, the patch plate 25, 26 has a function of reinforcing welding strength in the front adapter bracket 21, 22 which has a small area for welding.

Although the method of welding upper rail and adapter bracket in a seat track for vehicle seat according to the exemplary embodiment of the present invention has been disclosed, various modifications, additions and substitutions are possible, without departing from the scope and spirit of the invention. Therefore, the above embodiment must be regarded as one example provided for description of the present invention, rather than to limit the present invention.

## Claims

1. A method of welding an upper rail of a seat track for vehicle seat and adapter bracket for supporting a seat frame, the method comprising:
contacting surface-to-surface a lower surface of a planar coupling surface part which constitutes a lower end part of the adapter bracket and extends in a longitudinal direction to a predetermined length onto an upper surface of a planar horizontal surface part which constitutes an upper end part of the upper rail and extends in the longitudinal direction; and
joining the coupling surface part and the horizontal surface part by welding a lower surface of the horizontal surface part where the horizontal surface part is overlapped with the coupling surface part.

2. The method of welding an upper rail of a seat track for vehicle seat and adapter bracket for supporting a seat frame according to claim 1, wherein joining the coupling surface part and the horizontal surface part comprises performing laser welding along a two-dimensional path within an area of the lower surface of the horizontal surface part which is overlapped with the coupling surface part so that the joining between the coupling surface part and the horizontal surface part can be achieved.

3. The method of welding an upper rail of a seat track for vehicle seat and adapter bracket for supporting a seat frame according to claim 2, wherein the two-dimensional path is a shape of a zigzag.

4. A method of welding an upper rail of a seat track for vehicle seat and adapter bracket for supporting a seat frame, the method comprising:
contacting surface-to-surface a lower surface of a planar coupling surface part which constitutes a lower end part of the adapter bracket and extends in a longitudinal direction to a predetermined length onto an upper surface of a planar horizontal surface part which constitutes an upper end part of the upper rail and extends in the longitudinal direction;
adding a planar patch plate onto a lower surface of the horizontal surface part where the horizontal surface part is overlapped with the coupling surface part; and
joining the patch plate, the coupling surface part and the horizontal surface part integrally by welding a lower surface of the patch plate.

5. The method of welding an upper rail of a seat track for vehicle seat and adapter bracket for supporting a seat frame according to claim 4, wherein joining the patch plate, the coupling surface part and the horizontal surface part comprises performing laser welding along a two-dimensional path within an area of the lower surface of the patch plate so that the joining among the patch plate, the coupling surface part and the horizontal surface part can be achieved.

6. The method of welding an upper rail of a seat track for vehicle seat and adapter bracket for supporting a seat frame according to claim 5, wherein the two-dimensional path is a shape of a zigzag.
